(19) Europäisches Patentamt
European Patent Office
Office européen des brevets

(11) Numéro de publication: **0 344 069 B1**

(12) **FASCICULE DE BREVET EUROPEEN**

(45) Date de publication de fascicule du brevet: **01.12.93**

(51) Int. Cl.5: **C08G 18/42**, C08G 18/48, C08G 18/50, C08G 18/78, C08G 18/79, C09D 175/04

(21) Numéro de dépôt: **89401423.2**

(22) Date de dépôt: **25.05.89**

# (54) Couche de couverture transparente en polyuréthanne élastique souple ayant un effet anticondensation pour substrats transparents en verre ou en résine synthétique.

(30) Priorité: **27.05.88 DE 3817953**

(43) Date de publication de la demande: **29.11.89 Bulletin 89/48**

(45) Mention de la délivrance du brevet: **01.12.93 Bulletin 93/48**

(84) Etats contractants désignés: **AT BE CH DE ES FR GB IT LI LU NL SE**

(56) Documents cités:
**EP-A- 0 236 201**
**EP-A- 0 269 469**

**R. VIEWEG: "Kunststoff-Handbuch", Band VII, 1966, Carl Hanser Verlag, München**

(73) Titulaire: **SAINT-GOBAIN VITRAGE INTERNATIONAL**
**18, avenue d'Alsace**
**F-92400 Courbevoie(FR)**
(84) Etats contractants désignés: **BE CH ES FR GB IT LI LU NL SE AT**

(73) Titulaire: **VEGLA Vereinigte Glaswerke GmbH**
**Viktoriaallee 3-5**
**D-52066 Aachen(DE)**
(84) Etats contractants désignés: **DE**

(72) Inventeur: **Holzer, Gerhard**
**Dr Josef-Lamby-Strasse 2**
**D-5100 Aachen(DE)**
Inventeur: **Gelderie, Udo**
**Lindenstrasse 106**
**D-5100 Aachen(DE)**
Inventeur: **Breuer, Cornelia**
**Fritz-Erler-Ring 34**
**D-5173 Aldenhoven(DE)**

(74) Mandataire: **Muller, René et al**
**SAINT-GOBAIN RECHERCHE**
**39, quai Lucien Lefranc-BP 135**
**F-93303 Aubervilliers Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 344 069 B1

## Description

L'invention concerne une couche de couverture transparente pour des vitrages ou autres substrats transparents en verre ou en résine synthétique consistant en polyuréthanne élastique souple ayant un effet anticondensation.

Des couches de couverture transparentes élastiques souples ayant des propriétés anticondensation font l'objet de la demande de brevet allemand P 37 04 294. D'une part, elles ont la propriété que sous les sollicitations des genres habituels, qui conduisent avec les résines synthétiques plus dures à des déformations superficielles et à des défoncements en rayures, elles subissent uniquement une déformation élastique qui disparaît après peu de temps. D'autre part, elles ont l'avantage d'exercer une action anticondensation marquée. L'action anticondensation tient en l'occurrence à un effet synergique d'un polyétherpolyol sulfoné ou contenant des radicaux sulfonate et d'un polyéther-polysiloxanne non ionique simultanément présent, qui sont ajoutés au mélange de réaction formant le polyuréthanne.

L'effet anticondensation de ces couches de couverture connues est tout a fait satisfaisant aux températures moyennes. Aux températures inférieures à +10 degrés Celsius et après un contact prolongé avec l'eau, l'effet anticondensation n'est toutefois pas encore parfaitement satisfaisant lorsque les exigences sont élevées.

L'invention a pour but d'améliorer davantage l'effet anticondensation des couches de couverture connues de façon qu'elles exercent l'effet souhaité dans une mesure sensiblement non diminuée même à des températures inférieures à +10 degrés Celsius et après un contact prolongé avec l'eau.

Conformément à l'invention, ce but est atteint par le fait que le mélange de réaction contient les composants suivants:

a) un polyisocyanate trifonctionnel aliphatique à structure de biuret ou d'isocyanurate formé à base de 1,6-hexaméthylènediisocyanate, ayant une teneur en radicaux NCO de 12,6 à 28% en poids correspondant à un poids moléculaire moyen de 1000 à 450 g/mole;

b) un polyol trifonctionnel à base de triméthylolpropane et d'oxyde de propylène, ayant une teneur en radicaux OH de 5,1 à 12,8% en poids correspondant à un poids moléculaire moyen de 1000 à 400 g/mole; ou une polycaprolactone trifonctionnelle ayant une teneur en radicaux OH de 5,1 à 17% en poids correspondant à un poids moléculaire moyen de 1000 à 300 g/mole;

c) un éther polyoxyalcoylénique de 1,2- ou 1,3-diols difonctionnel sulfoné ou contenant des radicaux sulfonate ayant une teneur en radicaux OH de 0,5 à 13,2% en poids correspondant à un poids moléculaire moyen de 6500 à 250 g/mole de formule

$$R\text{-}CH_2O - (C_2H_4O\text{-})_n - (C_3H_6O - )_m - CH_2CH_2CH_2 - SO_3X$$

où R =

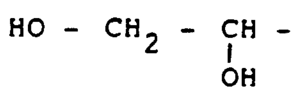

ou

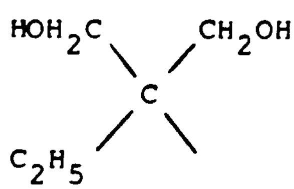

X = ion H, sodium ou ammonium,
n = 0 à 100,
m = 0 à 30,

$$n + m \geqq 1$$

d) un copolymère non ionique à base de diméthylpolysiloxanne polyoxyalcoylène-modifié dans la chaîne latérale (copolymère diméthylsiloxanne-monométhyl-polyéthersiloxanne) ayant un poids moléculaire moyen de 500 à 2000 g/mole de la formule générale

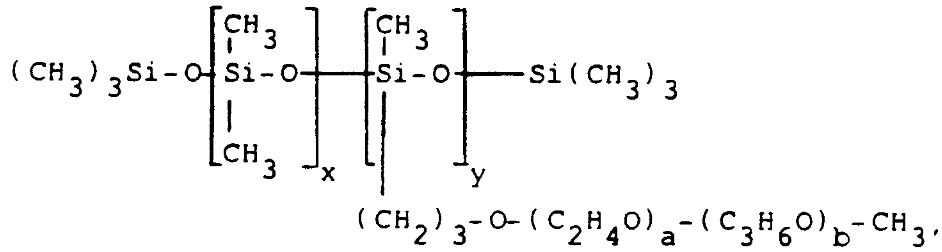

où le rapport x/y = 5/1 à 1/1,

a = 80 - 100% en poids, et

b = 20 - 0% en poids

e) au moins un tensio-actif non ionique sous la forme d'un alcool gras éthoxylé et/ou d'une amine grasse éthoxylée.

Les quantités des constituants du mélange de réaction qui forment le composant isocyanate et des constituants qui forment le composant polyol sont à choisir de façon que le rapport des radicaux NCO aux radicaux OH soit de 1,0 à 2,5. De préférence, les composants cités sont ajoutés au mélange de réaction en les proportions suivantes: isocyanate trifonctionnel 36 à 50% en poids, polyol trifonctionnel 42,5 à 18,7% en poids, éther polyoxyalcoylénique difonctionnel sulfoné ou contenant des radicaux sulfonate 4,8 à 5,5% en poids et copolymère non ionique 3,8 à 4,8% en poids.

Il s'est révélé que la composition conforme à l'invention du mélange de réaction améliore surtout la résistance au vieillissement de la couche de couverture. Il a été observé en particulier que l'effet anticondensation persiste plus longtemps après conservation de la couche de couverture dans l'eau. Même lorsqu'après une longue conservation de la couche de couverture dans l'eau à des températures inférieures à +10 degrés Celsius, l'effet anticondensation s'est transitoirement affaibli, la couche de couverture se régénère complètement lorsqu'on la conserve quelque temps à la température ambiante, de sorte qu'elle exerce à nouveau complètement l'effet anticondensation existant initialement. Même dans l'état non vieilli, la couche de couverture conforme à l'invention présente sur la couche de couverture citée initialement des avantages dans la mesure où elle est moins sensible à des fluctuations de la composition du mélange de réaction et des conditions de polymérisation.

Comme tensio-actifs non ioniques sous la forme d'alcools gras éthoxylés entrent en particulier en ligne de compte les alcools gras éthoxylés ayant une teneur en radicaux OH de 2,4 à 4,9% en poids correspondant à un poids moléculaire moyen de 700 à 350 g/mole de la formule

$$CH_3\text{-}(CH_2)_n - O - (C_2H_4O)_m - H$$

où n = 10 à 16 et m = 4 à 10. Des résultats particulièrement bons sont obtenus avec un alcool gras éthoxylé de cette composition ayant un poids moléculaire moyen d'environ 480 g/mole correspondant à une teneur en radicaux OH d'environ 3,5% en poids; dans ce cas n = 13 et m = 6 dans la formule chimique indiquée.

Comme tensio-actifs non ioniques sous la forme d'amines grasses éthoxylées, en particulier les amines grasses éthoxylées ayant une teneur en radicaux OH de 2, 2 à 6,5% en poids correspondant à un poids moléculaire moyen de 1600 à 520 g/mole de la formule

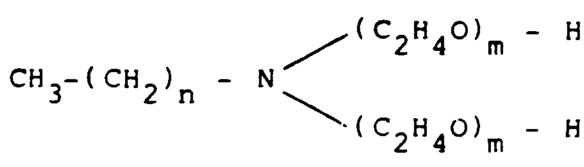

où n = 10 à 16 et m = 4 à 5 se sont révélées appropriées. On utilise de préférence une amine grasse éthoxylée de cette composition ayant un poids moléculaire moyen d'environ 1000 g/mole correspondant à une teneur en radicaux OH d'environ 3,4% en poids; dans ce cas, n = 13 et m = 9.

La proportion du tensio-actif non ionique dans le mélange de réaction se situe dans le cas de l'alcool gras éthoxylé avantageusement entre 8,3 et 15,5% en poids et dans le cas de l'amine grasse éthoxylée avantageusement entre 11,0 et 18,5% en poids.

Comme polyétherpolyols difonctionnels sulfonés ou contenant des radicaux sulfonate, on utilise de préférence des polyéther-1,3-diols ayant un poids moléculaire moyen d'environ 1300 g/mole. De tels polyétherpolyols et des procédés pour les préparer sont décrits plus en détail dans le document DE-PS 34 07 563.

Pour améliorer les propriétés mécaniques des couches de couverture en polyuréthanne élastique souple, il peut être avantageux d'ajouter de surcroît au mélange de réaction un produit d'addition difonctionnel d'isocyanate et d'urée à base d'isophoronediisocyanate, et ceci en une quantité de 4,0 à 18,7% en poids sur la base du mélange de réaction.

De même, il peut être avantageux pour améliorer les propriétés mécaniques d'ajouter au mélange de réaction éventuellement, en plus du produit d'addition difoncitonnel d'isocyanate et d'urée, un polyesterpolyol difonctionnel ayant une teneur en radicaux OH de 2 à 5% en poids correspondant à un poids moléculaire moyen de 1700 à 680 g/mole, en une quantité de 2,8 à 8,0% en poids sur la base du mélange de réaction.

Pour l'évaluation des propriétés physicomécaniques des couches de couverture en polyuréthanne élastique souple, on détermine comme grandeurs représentatives le module E, la résistance à l'abrasion et la dureté à la microrayure qui, dans leur ensemble, permettent de prévoir si la couche de couverture présentera les propriétés d'autoréparation requises et le comportement d'usage nécessaire. On détermine à cet effet le module E suivant le procédé décrit dans la norme DIN 53.457. Pour la détermination de la résistance à l'abrasion, on applique le procédé décrit dans la norme ECE R-43, suivant lequel deux cylindres abrasifs entrent en interaction sous une charge de 500 g avec l'éprouvette en rotation pendant 100 tours. Pour l'évaluation de l'abrasion résultant de cette sollicitation, on détermine ensuite suivant le procédé également décrit dans la norme ECE R-43 l'augmentation de la turbidité par comparaison avec la turbidité initiale avant la manipulation, qui est indiquée en %. On détermine la dureté à la microrayure suivant le procédé d'Erichsen, pour lequel on utilise un montage expérimental tel que décrit dans la norme DIN 53.799, sauf que le diamant de rayage conique utilisé présente un angle conique de 50 degrés et un rayon de courbure de 15 $\mu$m au sommet du cône. Pour l'évaluation de la dureté à la rayure, on indique le poids de sollicitation le plus élevé du diamant de rayage pour lequel aucune lésion visible permanente de la surface n'est identifiable.

On sait par l'expérience que les couches de couverture en polyuréthanne transparentes autoréparatrices peuvent être utilisées comme couches antiéclats lorsque le module E de ces couches se situe entre 2 et 20 N/mm$^2$, l'augmentation de turbidité par abrasion suivant ECE R-43 est inférieure à 4% et la dureté à la microrayure suivant Erichsen est supérieure à 10 p. De même, les couches de couverture hydrophiles ne conviennent pour un usage durable pratique que lorsque les propriétés indiquées se situent à l'intérieur de ces limites.

Pour l'évaluation de l'aptitude au mouillage de la couche de couverture et donc de son effet anticondensation, on mesure à l'aide d'un microscope à goniomètre l'angle limite de gouttes d'eau déposées sur la surface de la couche de couverture. Avec les couches de couverture connues en polyuréthanne élastique souple, qui ne manifestent pas d'effet anticondensation, la grandeur de l'angle limite est de 70 à 80 degrés. Par contre, avec les couches de couverture ayant une action anticondensation, la grandeur de l'angle limite n'est plus que de quelques degrés et peut même être abaissée jusqu'à zéro degré.

Différents exemples d'exécution sont décrits ci-après dans le cadre des compositions revendiquées et les propriétés mécaniques et anticondensation mesurées sur chacune de ces couches sont indiquées, l'exemple 1 concernant une couche de couverture non conforme à l'invention et servant uniquement pour la comparaison.

Dans tous les exemples d'exécution, on forme à partir du mélange de réaction des feuilles en coulant le mélange de réaction, après homogénéisation, en une épaisseur de couche de 0,5 mm sur des plaques de verre chauffées à environ 60 degrés Celsius. On laisse la couche coulée durcir pendant une durée de 30 minutes à une température de 90 degrés Celsius. Ensuite, on détache les feuilles du support de coulée. On conditionne les feuilles ensuite pendant 48 heures à une température de 20 degrés Celsius et à une humidité relative de l'air de 50%.

On détermine les propriétés mécaniques à la température ambiante, à savoir le module E, l'augmentation de turbidité par abrasion et la dureté à la microrayure.

On détermine l'angle limite comme mesure du comportement au mouillage chaque fois sur les deux surfaces des feuilles; la surface qui s'est trouvée au contact de la surface du verre est dite ci-après face A, tandis que la surface qui a été exposée à l'air ambiant pendant la coulée et le durcissement est dite face B dans les exemples ci-après. On mesure l'angle limite dans quelques exemples d'exécution après trois traitements préalables différents des feuilles: on fait la première mesure (mesure I) après le conditionnement de la feuille parallèlement à la détermination des propriétés mécaniques à une température de 20 degrés Celsius. On fait la deuxième mesure (mesure II) en succession à ceci à une température de +10 degrés Celsius. On fait la troisième mesure (mesure III) également à une température de +10 degrés Celsius après que la feuille a été au préalable immergée pendant 2 heures dans de l'eau à +10 degrés Celsius et ensuite séchée pendant 16 heures à 20 degrés Celsius et une humidité relative de l'air de 50%. Dans les exemples d'exécution qui ne comprennent qu'une seule indication à propos du comportement au mouillage, la mesure est faite après le conditionnement de la feuille à une température de 20 degrés Celsius.

EXEMPLE 1
(Exemple de comparaison)

On confectionne une couche de couverture telle qu'elle est décrite dans la demande de brevet allemand P 37 04 294. Pour la préparation du mélange de réaction, on utilise 50 g d'un polyisocyanate essentiellement trifonctionnel contenant des radicaux biuret à base de 1,6-hexaméthylènediisocyanate ayant une teneur en radicaux NCO libres de 23% en poids correspondant à un poids moléculaire moyen d'environ 550 g/mole, 42,5 g d'un polyol trifonctionnel à base de triméthylolpropane ayant une teneur en radicaux OH de 11% en poids correspondant à un poids moléculaire moyen d'environ 500 g/mole, ainsi que 8,5 g d'un polyéther-1,3-diol difonctionnel contenant des radicaux sulfonate ayant une teneur en radicaux OH de 2,6% en poids correspondant à un poids moléculaire moyen d'environ 1300 g/mole, de la formule indiquée ci-dessus où
R =

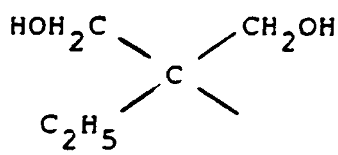 ,

X = ion sodium,
n = 20, et
m = 3.

De plus, le mélange de réaction contient 5 g d'un polyéther-polysiloxanne non ionique (copolymère diméthylsiloxanne-monométhylpolyéthersiloxanne) ayant un poids moléculaire moyen d'environ 700 g/mole et de la formule indiquée ci-dessus où le rapport x/y = 1/1,
a = 100% en poids, et
b = 0% en poids.

On ajoute au polyol 0,05 g de dilaurate de dibutylétain comme catalyseur et 1,0 g d'une amine à empêchement stérique comme stabilisant à la lumière.

Pour les propriétés mécaniques et le comportement au mouillage, on mesure les grandeurs suivantes:

| Propriétés mécaniques: | |
|---|---|
| Module E | 8,1 ± 0,2 $N/mm^2$ |
| Augmentation de turbidité par abrasion | 3,1% |
| Dureté à la microrayure | 28 p |

| Comportement au mouillage: | | | |
|---|---|---|---|
| | Mesure I | Mesure II | Mesure III |
| Face A | 0 degré | 13 degrés | 40 degrés |
| Face B | 5 degrés | 20 degrés | 42 degrés |

On constate que le comportement au mouillage n'est pas satisfaisant dans les conditions dans lesquelles les mesures II et III sont exécutées.

EXEMPLE 2

Pour la confection d'une couche de couverture conforme à l'invention, on utilise un mélange de réaction auquel on ajoute tant un polyétherpolyol difonctionnel contenant des radicaux sulfonate et un polyéther-polysiloxanne non ionique que de surcroît un alcool gras éthoxylé comme tensio-actif non ionique.

A cette fin, on mélange ensemble 50 g d'un polyisocyanate essentiellement trifonctionnel contenant des radicaux biuret à base de 1,6-hexaméthylènediisocyanate, ayant une teneur en radicaux NCO libres de 23% en poids correspondant à un poids moléculaire moyen d'environ 550 g/mole, 25 g d'un polyol trifonctionnel à base de triméthylolpropane, ayant une teneur en radicaux OH de 11% en poids correspondant à un poids moléculaire moyen d'environ 500 g/mole, 8 g d'un polyéther-1,3-diol difonctionnel contenant des radicaux sulfonate ayant une teneur en radicaux OH de 2,6% en poids correspondant à un poids moléculaire moyen d'environ 1300 g/mole de la formule indiquée ci-dessus où
R =

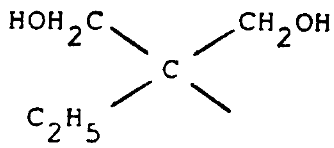

X = ion sodium,
n = 20 et
m = 3,
5 g du copolymère diméthylsiloxanne-monométhylpolyéthersiloxanne cité dans l'exemple 1, ainsi que 8 g d'un alcool gras éthoxylé de la formule indiquée initialement ayant un poids moléculaire moyen d'environ 350 g/mole correspondant à une teneur en radicaux OH de 4,9% en poids, avec n = 10 et m = 4 dans la formule chimique. Comme additifs, on ajoute au polyol 0,05 g de dilaurate de dibutylétain comme catalyseur et 1,0 g d'une amine à empêchement stérique comme stabilisant à la lumière.

Pour les propriétés mécaniques et le comportement au mouillage de cette feuille, on mesure les grandeurs suivantes:

| Propriétés mécaniques: | |
|---|---|
| Module E | 6,6 ± 0,4 $N/mm^2$ |
| Augmentation de turbidité par abrasion | 2,6% |
| Dureté à la microrayure | 26 p |

| Comportement au mouillage: | | | |
|---|---|---|---|
| | Mesure I | Mesure II | Mesure III |
| Face A | 0 degré | 5 degrés | 5 degrés |
| Face B | 6 degrés | 8 degrés | 5 degrés |

Les propriétés mécaniques de cette couche de couverture se situent par conséquent entre les limites exigées. Le comportement au mouillage aux basses températures et en particulier après immersion dans l'eau est notablement amélioré par rapport à l'exemple de comparaison.

EXEMPLE 3

On prépare un mélange de réaction à partir des composants suivants:
- 50 g d'un polyisocyanate essentiellement trifonctionnel contenant des radicaux biuret à base de 1,6-hexaméthylènediisocyanate, ayant une teneur en radicaux NCO libres de 23% en poids correspondant à un poids moléculaire moyen d'environ 550 g/mole;
- 29 g d'un polyol trifonctionnel à base de triméthylolpropane, ayant une teneur en radicaux OH de 11% en poids correspondant à un poids moléculaire moyen d'environ 500 g/mole;

- 6 g d'un polyéther-1,3-diol difonctionnel contenant des radicaux sulfonate, ayant une teneur en radicaux OH de 2,6% en poids correspondant à un poids moléculaire moyen d'environ 1300 g/mole;
- 5 g du copolymère diméthylsiloxanne-monométhylpolyéthersiloxanne cité dans l'exemple 1;
- 12 g d'un alcool gras éthoxylé de la formule indiquée initialement, ayant une teneur en radicaux OH de 3,5% en poids correspondant à un poids moléculaire moyen d'environ 480 g/mole, avec n = 13 et m = 6 dans la formule chimique.

Comme additifs, on ajoute au polyol 0,05 g de dilaurate de dibutylétain comme catalyseur et 1,0 g d'une amine à empêchement stérique comme stabilisant à la lumière.

Sur une feuille confectionnée à partir de ce mélange de réaction, on mesure pour les propriétés mécaniques et le comportement au mouillage les grandeurs suivantes:

| Propriétés mécaniques: | |
|---|---|
| Module E | 7,4 ± 0,4 $N/mm^2$ |
| Augmentation de turbidité par abrasion | 3,1% |
| Dureté à la microrayure | 26 p |

| Comportement au mouillage; | | | |
|---|---|---|---|
| | Mesure I | Mesure II | Mesure III |
| Face A | 0 degré | 5 degrés | 5 degrés |
| Face B | 5 degrés | 9 degrés | 7 degrés |

Les propriétés mécaniques se situent entre les limites exigées. Le comportement au mouillage aux basses températures et en particulier après le traitement à l'eau est nettement amélioré par rapport à l'exemple de comparaison.

EXEMPLE 4

On prépare un mélange de réaction à partir des composants suivants:

- 50 g du polyisocyanate trifonctionnel cité dans les exemples précédents, ayant une teneur en radicaux NCO libres de 23% en poids correspondant à un poids moléculaire moyen d'environ 550 g/mole;
- 29 g d'un polyol trifonctionnel à base de triméthylolpropane ayant une teneur en radicaux OH de 11% en poids correspondant à un poids moléculaire moyen d'environ 500 g/mole;
- 4 g d'un polyéther-1,3-diol difonctionnel contenant des radicaux sulfonate, ayant une teneur en radicaux OH de 2,6% en poids correspondant à un poids moléculaire moyen d'environ 1300 g/mole, de la formule indiquée initialement où
  R =

  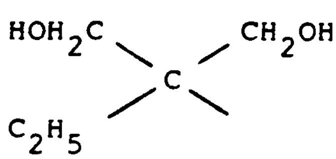
  .

  X = ion sodium,
  n = 20 et
  m = 3,
- 5 g du copolymère diméthylsiloxanne-monométhylpolyéthersiloxanne cité dans l'exemple 1;
- 16 g d'un alcool gras éthoxylé de la formule indiquée initialement, ayant un poids moléculaire moyen d'environ 700 g/mole correspondant à une teneur en radicaux OH de 2,4% en poids, avec n = 16 et m = 10 dans la formule chimique.

Comme additifs, on ajoute au polyol 0,05 g de dilaurate de dibutylétain comme catalyseur et 1,0 g d'une amine à empêchement stérique comme stabilisant à la lumière.

Sur une feuille confectionnée à partir de ce mélange de réaction, on mesure pour les propriétés mécaniques et pour le comportement au mouillage les grandeurs suivantes:

| Propriétés mécaniques: | |
|---|---|
| Module E<br>Augmentation de turbidité par abrasion<br>Dureté à la microrayure | 4,5 ± 0,4 $N/mm^2$<br>2,2%<br>27 p |

| Comportement au mouillage; | | | |
|---|---|---|---|
| | Mesure I | Mesure II | Mesure III |
| Face A<br>Face B | 0 degré<br>5 degrés | 5 degrés<br>7 degrés | 5 degrés<br>5 degrés |

Dans ce cas également, les propriétés mécaniques se situent entre les limites exigées. Le comportement au mouillage aux basses températures et en particulier après l'immersion dans l'eau est nettement amélioré par rapport à l'exemple de comparaison.

EXEMPLE 5

Le mélange de réaction a la constitution suivante:

- 50 g du polyisocyanate trifonctionnel cité dans les exemples précédents, ayant une teneur en radicaux NCO libres de 23% en poids correspondant à un poids moléculaire moyen d'environ 550 g/mole;
- 20 g d'un polyol trifonctionnel à base de trimétylolpropane, ayant une teneur en radicaux OH de 11% en poids correspondant à un poids moléculaire moyen d'environ 500 g/mole;
- 5 g du polyéther 1,3-diol difonctionnel contenant des radicaux sulfonate cité dans l'exemple 4, ayant une teneur en radicaux OH de 2,6% en poids correspondant à un poids moléculaire moyen d'environ 1300 g/mole;
- 5 g du copolymère diméthylsiloxanne-monométhylpoly éthersiloxanne cité dans l'exemple 1;
- 15 g d'une amine grasse éthoxylée de la formule indiquée initialement, ayant un poids moléculaire moyen d'environ 520 g/mole correspondant à une teneur en radicaux OH de 6,5% en poids, avec $n = 10$ et $m = 4$ dans la formule chimique.

Comme additifs, on ajoute au polyol 0,05 g de dilaurate de dibutylétain comme catalyseur et 1,0 g d'une amine à empêchement stérique comme stabilisant à la lumière.

Sur une feuille confectionnée à partir de ce mélange de réaction, on mesure pour les propriétés mécaniques et le comportement au mouillage les grandeurs suivantes:

| Propriétés mécaniques: | |
|---|---|
| Module E<br>Augmentation de turbidité par abrasion<br>Dureté à la microrayure | 9,5 ± 0,8 $N/mm^2$<br>2,7%<br>33 p |

| Comportement au mouillage: | | | |
|---|---|---|---|
| | Mesure I | Mesure II | Mesure III |
| Face A<br>Face B | 0 degré<br>7 degrés | 5 degrés<br>10 degrés | 6 degrés<br>10 degrés |

Cette couche de couverture également présente des propriétés mécaniques qui se situent entre les limites exigées. Le comportement au mouillage aux basses températures et en particulier après l'immersion

dans l'eau est nettement amélioré par rapport à l'exemple de comparaison.

EXEMPLE 6

On prépare un mélange de réaction à partir des constituants suivants:

- 50 g du polyisocyanate trifonctionnel décrit dans les exemples précédents;
- 28 g du polyol trifonctionnel à base de triméthylolpropane décrit dans les exemples précédents;
- 6 g du polyéther-1,3-diol difonctionnel contenant des radicaux sulfonate cité dans l'exemple 4;
- 5 g du copolymère diméthylsiloxanne-monométhylpolyéthersiloxanne cité dans l'exemple 1;
- 11 g d'une amine grasse éthoxylée de la formule indiquée initialement, ayant un poids moléculaire moyen d'environ 1000 g/mole correspondant à une teneur en radicaux OH de 3,4% en poids, avec n = 13 et m = 9.

Comme additifs, on ajoute au polyol 0,05 g de dilaurate de dibutylétain comme catalyseur et 1,0 g d'une amine à empêchement stérique comme stabilisant à la lumière.

Sur une feuille confectionnée à partir de ce mélange de réaction, on mesure pour les propriétés mécaniques et le comportement au mouillage les grandeurs suivantes:

| Propriétés mécaniques: | |
|---|---|
| Module E | 8,3 ± 0,3 $N/mm^2$ |
| Augmentation de turbidité par abrasion | 1,8% |
| Dureté à la microrayure | 25 p |

| Comportement au mouillage: | | | |
|---|---|---|---|
| | Mesure I | Mesure II | Mesure III |
| Face A | 0 degré | 5 degrés | 7 degrés |
| Face B | 8 degrés | 10 degrés | 11 degrés |

Cette couche de couverture également présente donc des propriétés qui, d'une part pour ce qui concerne les propriétés mécaniques, se situent entre les limites exigées,et d'autre part pour ce qui concerne le comportement au mouillage aux basses températures et après immersion dans l'eau, sont nettement meilleures que celles de la couche de couverture conforme à l'exemple de comparaison.

EXEMPLE 7

On prépare un mélange de réaction à partir des constituants suivants:

- 50 g du polyisocyanate trifonctionnel décrit dans les exemples précédents;
- 25 g du polyol trifonctionnel à base de triméthylolpropane décrit dans les exemples précédents;
- 8 g du polyéther-1,3-diol difonctionnel contenant des radicaux sulfonate cité dans l'exemple 4;
- 5 g du copolymère diméthylsiloxanne-monométhylpolyéthersiloxanne cité dans l'exemple 1;
- 20 g d'une amine grasse éthoxylée de la formule indiquée initialement, ayant un poids moléculaire moyen d'environ 1570 g/mole correspondant à une teneur en radicaux OH de 2,2% en poids, avec n = 16 et m = 15.

Comme additifs, on ajoute au polyol 0,05 g de dilaurate de dibutylétain comme catalyseur et 1,0 g d'une amine à empêchement stérique comme stabilisant à la lumière.

Sur une feuille confectionnée à partir de ce mélange de réaction, on mesure pour les propriétés mécaniques et le comportement au mouillage les grandeurs suivantes:

| Propriétés mécaniques: | |
|---|---|
| Module E | 6,3 ± 0,4 $N/mm^2$ |
| Augmentation de turbidité par abrasion | 2,7% |
| Dureté à la microrayure | 28 p |

| Comportement au mouillage: | | | |
|---|---|---|---|
| | Mesure I | Mesure II | Mesure III |
| Face A<br>Face B | 0 degré<br>4 degrés | 6 degrés<br>8 degrés | 6 degrés<br>7 degrés |

Pour cette couche de couverture également, le comportement au mouillage aux basses températures et après immersion dans l'eau est nettement meilleur que pour la couche de couverture conforme à l'exemple de comparaison, tandis que les propriétés mécaniques tombent également entre les limites exigées.

EXEMPLE 8

On prépare un mélange de réaction à partir des constituants suivants:

- 36,11 g du polyisocyanate trifonctionnel décrit dans l'exemple 3,
- 4,01 g d'un produit d'addition difonctionnel d'isocyanate et d'urée à base d'isophoronediisocyanate ayant une teneur en radicaux OH de 28% en poids correspondant à un poids moléculaire moyen de 300 g/mole,
- 32,78 g d'une polycaprolactone ayant une teneur en radicaux OH de 9,5% en poids correspondant à un poids moléculaire moyen de 537 g/mole,
- 8,02 g d'un polyesterpolyol difonctionnel ayant une teneur en radicaux OH de 3,3% en poids correspondant à un poids moléculaire moyen de 1030 g/mole,
- 4,81 g d'un polyéther-1,3-diol difonctionnel contenant des radicaux sulfonate ayant une teneur en radicaux OH de 2,6% en poids correspondant à un poids moléculaire moyen d'environ 1300 g/mole,
- 10,03 g d'un alcool gras éthoxylé de la formule indiquée initialement, ayant une teneur en radicaux OH de 3,5% en poids correspondant à un poids moléculaire moyen d'environ 480 g/mole, avec $n = 13$ et $m = 6$ dans la formule chimique,
- 3,81 g du copolymère diméthylsiloxanne-monométhylpolyéthersiloxanne cité dans l'exemple 1,
- 0,019 g de dilaurate de dibutylétain, et
- 0,39 g d'une amine à empêchement stérique comme stabilisant à la lumière.

Le mélange de réaction a un rapport NCO/OH de 1,0.

Sur une feuille confectionnée à partir de ce mélange de réaction, on mesure pour les propriétés mécaniques et le comportement au mouillage les grandeurs suivantes:

| Propriétés mécaniques: | |
|---|---|
| Module E<br>Augmentation de turbidité par abrasion<br>Dureté à la microrayure | 6,2 N/mm$^2$<br>2,12%<br>38 p |

| Comportement au mouillage: | |
|---|---|
| Face A<br>Face B | 0 degré<br>3 degrés |

EXEMPLE 9

On pèse les quantités ci-après des composants cités dans l'exemple 8 et on en prépare le mélange de réaction:

- 40,83 g de polyisocyanate trifonctionnel
- 10,21 g de produit d'addition difonctionnel d'isocyanate et d'urée
- 21,84 g de polycaprolactone
- 5,46 g de polyesterpolyol difonctionnel
- 5,46 g de polyéther-1,3-diol difonctionnel contenant des radicaux sulfonate
- 10,92 g d'alcool gras éthoxylé

- 4,75 g de copolymère diméthylsiloxanne-monométhyl-polyéthersiloxanne
- 0,024 g de dilaurate de dibutylétain, et
- 0,50 g d'amine à empêchement stérique

Le mélange de réaction a un rapport NCO/OH de 1,8.

Sur une feuille confectionnée à partir de ce mélange de réaction, on mesure pour les propriétés mécaniques et le comportement au mouillage les grandeurs suivantes:

| Propriétés mécaniques: | |
|---|---|
| Module E | 7,2 $N/mm^2$ |
| Augmentation de turbidité par abrasion | 2,56% |
| Dureté à la microrayure | 34 p |

| Comportement au mouillage: | |
|---|---|
| Face A | 0 degré |
| Face B | 3 degrés |

EXEMPLE 10

On pèse les quantités ci-après des composants cités dans l'exemple 8 et on en prépare le mélange de réaction:

- 42,80 g de polyisocyanate trifonctionnel
- 10,70 g de produit d'addition difonctionnel d'isocyanate et d'urée
- 20,65 g de polycaprolactone
- 5,16 g de polyesterpolyol difonctionnel
- 5,14 g de polyéther-1,3-diol difonctionnel contenant des radicaux sulfonate
- 10,32 g d'alcool gras éthoxylé
- 4,71 g de copolymère diméthylsiloxanne-monométhyl-polyéthersiloxanne
- 0,024 g de dilaurate de dibutylétain, et
- 0,50 g d'amine à empêchement stérique

Le mélange de réaction a un rapport NCO/OH de 2,0.

Sur une feuille confectionnée à partir de ce mélange de réaction, on mesure pour les propriétés mécaniques et le comportement au mouillage les grandeurs suivantes:

| Propriétés mécaniques: | |
|---|---|
| Module E | 7,4 $N/mm^2$ |
| Augmentation de turbidité par abrasion | 3,74% |
| Dureté à la microrayure | 33 p |

| Comportement au mouillage: | |
|---|---|
| Face A | 0 degré |
| Face B | 4 degrés |

EXEMPLE 11

On pèse les quantités ci-après des composants cités dans l'exemple 8 et on en prépare le mélange de réaction:

- 39,57 g de polyisocyanate trifonctionnel
- 18,71 g de produit d'addition difonctionnel d'isocyanate et d'urée

- 18,68 g de polycaprolactone
- 2,83 g de polyesterpolyol difonctionnel
- 4,97 g de polyéther-1,3-diol difonctionnel contenant des radicaux sulfonate
- 9,89 g d'alcool gras éthoxylé
- 4,81 g de copolymère diméthylsiloxanne-monométhyl-polyéthersiloxanne
- 0,025 g de dilaurate de dibutylétain, et
- 0,50 g d'amine à empêchement stérique

Le mélange de réaction a un rapport NCO/OH de 2,5.

Sur une feuille confectionnée à partir de ce mélange de réaction, on mesure pour les propriétés mécaniques et le comportement au mouillage les grandeurs suivantes:

| Propriétés mécaniques: | |
|---|---|
| Module E | 13,6 N/mm$^2$ |
| Augmentation de turbidité par abrasion | 3,90 % |
| Dureté à la microrayure | 30 p |

| Comportement au mouillage: | |
|---|---|
| Face A | 0 degré |
| Face B | 24 degrés |

## Revendications

**1.** Couche de couverture transparente pour des vitrages ou autres substrats transparents en verre ou en résine synthétique, consistant en polyuréthanne élastique souple qui est préparé à partir d'un mélange de réaction qui comprend les composants suivants:

a) un polyisocyanate trifonctionnel aliphatique à structure de biuret ou d'isocyanurate formé à base de 1,6-hexaméthylènediisocyanate, ayant une teneur en radicaux NCO de 12,6 à 28% en poids correspondant à un poids moléculaire moyen de 1000 à 450 g/mole;

b) un polyol trifonctionnel à base de triméthylolpropane et d'oxyde de propylène, ayant une teneur en radicaux OH de 5,1 à 12,8% en poids correspondant à un poids moléculaire moyen de 1000 à 400 g/mole, ou d'une polycaprolactone trifonctionnelle ayant une teneur en radicaux OH de 5,1 à 17% en poids correspondant à un poids moléculaire moyen de 1000 à 300 g/mole;

c) un éther polyoxyalcoylénique de 1,2- ou 1,3-diols difonctionnel sulfoné ou contenant des radicaux sulfonate ayant une teneur en radicaux OH de 0,5 à 13,2% en poids correspondant à un poids moléculaire moyen de 6500 à 250 g/mole de formule

$$R\text{-}CH_2O - (C_2H_4O\text{-})_n - (C_3H_6O\text{-})_m - CH_2CH_2CH_2 - SO_3X$$

où R =

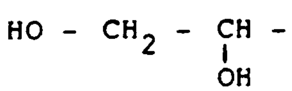 ou 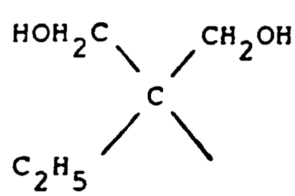

X = ion H, sodium ou ammonium,
n = 0 à 100,
m = 0 à 30,

n + m ≧ 1

d) un copolymère non ionique à base de diméthylpolysiloxanne polyoxyalcoylène-modifié dans la chaîne latérale (copolymère diméthylsiloxanne-monométhylpolyéthersiloxanne) ayant un poids moléculaire moyen de 500 à 2000 g/mole de la formule générale

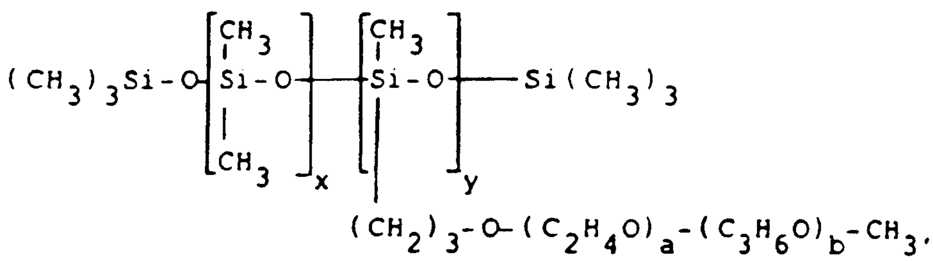

où le rapport x/y = 5/1 à 1/1,
a = 80 - 100% en poids, et
b = 20 - 0% en poids, et

e) au moins un tensio-actif non ionique sous la forme d'un alcool gras éthoxylé et/ou d'une amine grasse éthoxylée,

les quantités des constituants du mélange de réaction qui forment le composant isocyanate et des constituants qui forment le composant polyol sont à choisir de façon que le rapport des radicaux NCO aux radicaux OH soit de 1,0 à 2,5.

**2.** Couche de couverture transparente suivant la revendication 1, caractérisée en ce que le mélange de réaction contient de surcroît 4,0 à 18,7% en poids d'un produit d'addition difonctionnel d'isocyanate et d'urée à base d'isophoronediisocyanate ayant une teneur en radicaux NCO de 23 à 29% en poids correspondant à un poids moléculaire moyen de 365 à 200 g/mole.

**3.** Couche de couverture transparente suivant la revendication 1 ou 2, caractérisée en ce que le mélange de réaction contient de surcroît 2,8 à 8,0% en poids d'un polyesterpolyol difonctionnel ayant une teneur en radicaux OH de 2 à 5% en poids correspondant à un poids moléculaire moyen de 1700 à 680 g/mole.

**4.** Couche de couverture transparente suivant l'une quelconque des revendications 1 à 3, caractérisée en ce qu'un tensio-actif non ionique sous la forme d'un alcool gras éthoxylé ayant une teneur en radicaux OH de 2,4 à 4,9% en poids correspondant à un poids moléculaire moyen de 700 à 350 g/mole de la formule

$$CH_3 - (CH_2)_n - O - (C_2H_4O)_m - H$$

où n = 10 à 16 et m = 4 à 10 est utilisé.

**5.** Couche de couverture transparente suivant la revendication 4, caractérisée en ce que la proportion de l'alcool gras éthoxylé dans le mélange de réaction est de 8,3 à 15,5% en poids.

**6.** Couche de couverture transparente suivant l'une quelconque des revendications 1 à 3, caractérisée en ce qu'un tensio-actif non ionique sous la forme d'une amine grasse éthoxylée ayant une teneur en radicaux OH de 2,2 à 6,5% en poids correspondant à un poids moléculaire moyen de 1600 à 520 g/mole de la formule

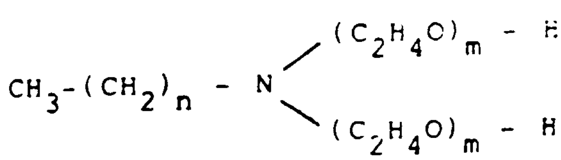

où n = 10 à 16 et m = 4 à 15 est utilisé.

7. Couche de couverture transparente suivant la revendication 6, caractérisée en ce que la proportion de l'amine grasse éthoxylée dans le mélange de réaction est de 11,0 à 18,5% en poids.

## Claims

1. Transparent covering film for panes or other transparent substrates of glass or synthetic resin, consisting of a flexible, elastic polyurethane which is prepared from a reaction mixture which contains the following components:

   a) an aliphatic trifunctional polyisocyanate having a biuret or isocyanurate structure formed on a basis of 1,6-hexamethylene diisocyanate, having an NCO radicals content of 12.6 to 28% by weight corresponding to a mean molecular weight of 1,000 to 450 g/mole;

   b) a trifunctional polyol based upon trimethylol propane and propylene oxide, having an OH radicals content of 5.1 to 12.8% by weight corresponding to a mean molecular weight of 1,000 to 400 g/mole, or upon a trifunctional polycaprolactone having an OH radicals content of 5.1 to 17% by weight corresponding to a mean molecular weight of 1,000 to 300 g/mole;

   c) a sulphonated difunctional polyoxyalkylenic ether of 1,2- or 1,3-diols or such a difunctional polyoxyalkylenic ether containing sulphonate radicals and having an OH radicals content of 0.5 to 13.2% by weight corresponding to a mean molecular weight of 6,500 to 250 g/mole having the formula

   $R\text{-}CH_2O - (C_2H_4O\text{-})_n - (C_3H_6O\text{-})_m - CH_2CH_2CH_2 - SO_3X$

   where R =

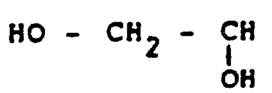
or
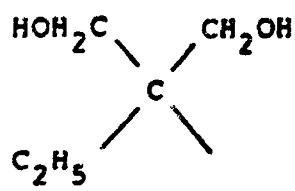

   X = H, sodium or ammonium ion,
   n = 0 to 100,
   m = 0 to 30,

   $n + m \geqq 1$

   d) a non-ionic copolymer based upon dimethyl-polysiloxane, with side chains modified by polyoxyalkylene (a copolymer of dimethylsiloxane and monomethyl-polyethersiloxane) having a mean molecular weight of 500 to 2,000 g/mole and having the general formula

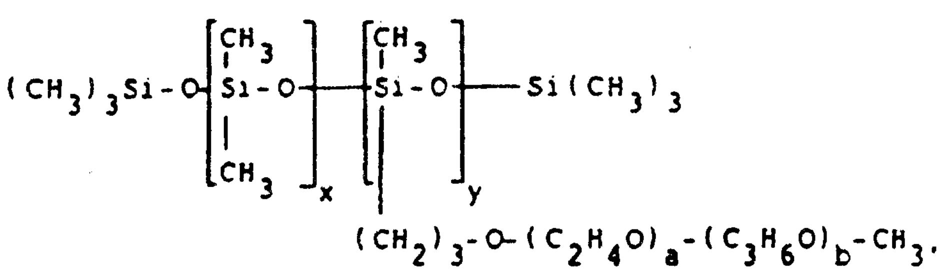

   where the ratio x/y = 5/1 to 1/1,

a = 80-100% by weight, and
b = 20- 0% by weight, and
e) at least one non-ionic surface-active agent in the form of an ethoxylated fatty alcohol and/or of an ethoxylated fatty amine,

the quantities of the constituents of the reaction mixture which form the isocyanate component and of the constituents which form the polyol component are to be so chosen that the ratio of the NCO radicals to the OH radicals shall be from 1.0 to 2.5.

**2.** Transparent covering film according to Claim 1, characterized in that the reaction mixture contains, in addition, 4.0 to 18.7% by weight of a difunctional addition product of isocyanate and urea based upon isophorone diisocyanate having an NCO radicals content of 23 to 29% by weight corresponding to a mean molecular weight of 365 to 200 g/mole.

**3.** Transparent covering film according to Claim 1 or 2, characterized in that the reaction mixture contains, in addition, 2.8 to 8.0% by weight of a difunctional polyester polyol having an OH radicals content of 2 to 5% by weight corresponding to a mean molecular weight of 1,700 to 680 g/mole.

**4.** Transparent covering film according to any one of Claims 1 to 3, characterized in that a non-ionic surface-active agent in the form of an ethoxylated fatty alcohol having an OH radicals content of 2.4 to 4.9% by weight corresponding to a mean molecular weight of 700 to 350 g/mole having the formula

$$CH_3 - (CH_2)_n - O - (C_2H_4O)_m - H$$

where n = 10 to 16 and m = 4 to 10 is used.

**5.** Transparent covering film according to Claim 4, characterized in that the proportion of ethoxylated fatty alcohol in the reaction mixture is from 8.3 to 15.5% by weight.

**6.** Transparent covering film according to any one of Claims 1 to 3, characterized in that a non-ionic surface-active agent in the form of an ethoxylated fatty amine having an OH radicals content of 2.2 to 6.5% by weight corresponding to a mean molecular weight of 1,600 to 520 g/mole having the formula

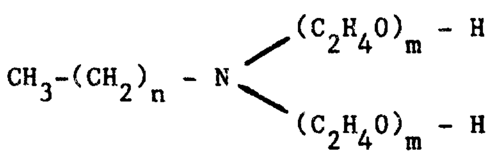

where n = 10 to 16 and m = 4 to 15 is used.

**7.** Transparent covering film according to Claim 6, characterized in that the proportion of ethoxylated fatty amine in the reaction mixture is from 11.0 to 18.5% by weight.

**Patentansprüche**

**1.** Transparente Deckschicht für Glasscheiben oder andere transparente Glas- oder Kunststoffsubstrate, aus weichelastischem Polyurethan, das aus einer Reaktionsmischung hergestellt ist, die folgende Komponenten aufweist:

a) ein trifunktionelles aliphatisches, auf der Basis von 1,6-Hexamethylendiisocyanat aufgebautes Polyisocyanat mit Biuret- oder Isocyanuratstruktur mit einem Gehalt an NCO-Radikalen von 12,6 bis 28 Gew.-% entsprechend einem mittleren Molekulargewicht von 1000 bis 450 g/mol;
b) ein trifunktionelles Polyol auf der Basis von Trimethylolpropan und Propylenoxid mit einem Gehalt an OH-Radikalen von 5,1 bis 12,8 Gew.-% entsprechend einem mittleren Molekulargewicht von 1000 bis 400 g/mol, oder ein trifunktionelles Polycaprolacton mit einem Gehalt an OH-Radiaklen von 5,1 bis 17 Gew.-% entsprechend einem mittleren Molekulargewicht von 1000 bis 300 g/mol:
c) einen difunktionellen sulfonierten bzw. sulfonatgruppenhaltigen Polyoxyalkylenether von 1,2- oder 1,3-Diolen mit einem Gehalt an OH-Radikalen von 0,5 bis 13,2 Gew.-% entsprechend einem mittleren Molekulargewicht von 6500 bis 250 g/mol der Formel

$R\text{-}CH_2O\text{—}(C_2H_4O\text{—})_n\text{-}(C_3H_6O\text{—})_m\text{-}CH_2CH_2CH_2\text{—}SO_3X$

wobei
R =

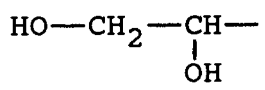

oder

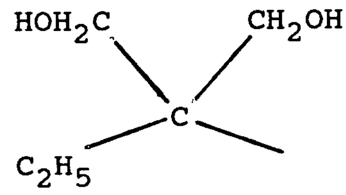

X = H-, Natrium- oder Ammoniumion,
n = 0 bis 100,
m = 0 bis 30,

$n + m \geqq 1$

bedeuten;
d) ein nichtionisches Copolymeres auf der Basis von in der Seitenkette polyoxyalkylenmodifiziertem Dimethylpolysiloxan (Dimethylsiloxan-Monomethylpolyethersiloxan-Copolymer) mit einem mittleren Molekulargewicht von 500 - 2000 g/mol der allgemeinen Formel

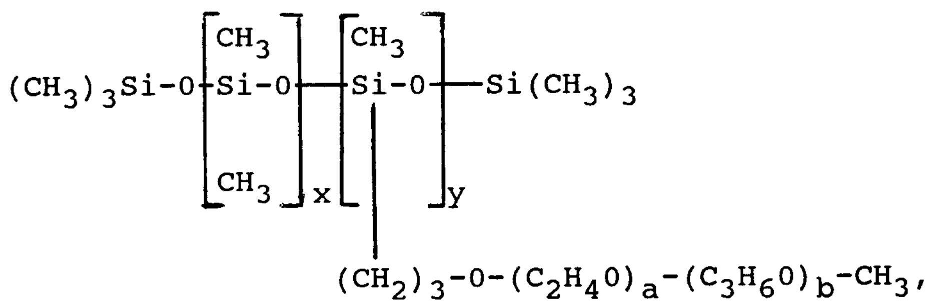

wobei das Verhältnis x/y = 5/1 bis 1/1,
a = 80 - 100 Gew.-%, und
b = 20 - 0 Gew.-%
bedeuten, und
e) wenigstens ein nichtionisches Tensid in Form eines ethoxylierten Fettalkohols und/oder eines ethoxylierten Fettamins, wobei die Mengen der die Isocynatkomponente und die Polyolkomponente bildenden Bestandteile der Reaktionsmischung so zu wählen sind, daß das Verhältnis der NCO-Radikalen zu den OH-Radikalen 1,0 bis 2,5 beträgt.

**2.** Transparente Deckschicht nach Anspruch 1, dadurch gekennzeichnet, daß die Reaktionsmischung zusätzlich 4,0 bis 18,7 Gew.-% eines difunktionellen Isocyanatharnstoffaddukts auf der Basis von Isophorondiisoyanat mit einem Gehalt an NCO-Radikalen von 23 bis 29 Gew.-% entsprechend einem mittleren Molekulargewicht von 365 bis 290 g/mol enthält.

**3.** Transparente Deckschicht nach Anspruch 1 oder 2, dadurch gekennzeichnet, daß die Reaktionsmischung zusätzlich 2,8 bis 8,0 Gew.-% eines difunktionellen Polyesterpolyols mit einem Gehalt an OH-Radikalen von 2 bis 5 Gew.-% entsprechend einem mittleren Molekulargewicht von 1700 bis 680 g/mol enthält.

4. Transparente Deckschicht nach einem der Ansprueche 1 bis 3, dadurch gekennzeichnet, daß ein nichtionisches Tensid in Form eines ethoxylierten Fettalkohols mit einem Gehalt an OH-Radikalen von 2,4 bis 4,9 Gew.-% entsprechend einem mittleren Molekulargewicht von 700 bis 350 g/mol der Formel

$CH_3-(CH_2)_n-O-(C_2H_4O)_m-H$

verwendet wird, wobei
n = 10 bis 16 und m = 4 bis 10 bedeuten.

5. Transparente Deckschicht nach Anspruch 4, dadurch gekennzeichnet, daß der Anteil des ethoxylierten Fettalkohols in der Reaktionsmischung 8,3 bis 15,5 Gew.-% beträgt.

6. Transparente Deckschicht nach einem der Ansprueche 1 bis 3, dadurch gekennzeichnet, daß ein nichtionisches Tensid in Form eines ethoxylierten Fettamins mit einem Gehalt an OH-Radikalen von 2,2 bis 6,5 Gew.-% entsprechend einem mittleren Molekulargewicht von 1600 bis 520 g/mol der Formel

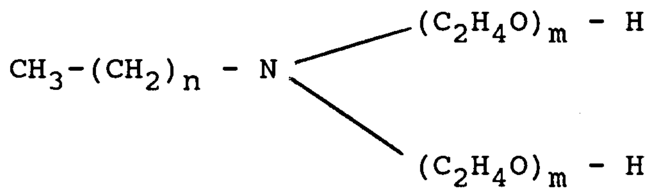

verwendet wird, wobei
n = 10 bis 16 und m = 4 bis 15 bedeuten.

7. Transparente Deckschicht nach Anspruch 6, dadurch gekennzeichnet, daß der Anteil des ethoxylierten Fettamins in der Reaktionsmischung 11,0 bis 18,5 Gew.-% beträgt.